# EUROPÄISCHE PATENTANMELDUNG

(11) **EP 1 380 457 A2**
(43) Veröffentlichungstag der Anmeldung: **14.01.2004**
(21) Anmeldenummer: 03015710.1
(22) Anmeldetag: 09.07.2003
(51) Int. Cl.: B60J 7/10, B60P 1/02, B65G 67/20, B60P 1/44

(54) **Ladeaufbau für ein Kraftfahrzeug**

(30) Priorität: 10.07.2002 DE 20210659 U; 07.01.2003 DE 20300108 U; 06.06.2003 DE 20308990 U
(71) Anmelder: Westfalia WST Systemtechnik GmbH & Co. KG, 33829 Borgholzhausen (DE)
(72) Erfinder: Wiedenmann, Reinhold, 59555 Lippstadt (DE); Kramer, Rainer, 33332 Gütersloh (DE)
(74) Vertreter: Philipp, Matthias, Dr.

(57) **Zusammenfassung**

Ladeaufbau für ein Kraftfahrzeug, mit einem unteren Ladeboden (10) und einem im Inneren des Ladeaufbaus angeordneten, höhenverstellbaren Hubboden (12), und an einem hinteren Ende des Ladeaufbaus ein anheb- und absenkbarer Ladelift (14) und daß der untere Ladeboden und/oder der Hubboden (jeweils) eine Fördereinrichtung aufweist, um zylindrische Ladeeinheiten, insb. Papierrollen, deren Längsachse in Fahrzeuglängsrichtung weist, in Fahrzeuglängsrichtung zu transportieren.

## Beschreibung

Die Erfindung betrifft einen Ladeaufbau für ein Kraftfahrzeug, mit einem unteren Ladeboden und einem im Inneren des Ladeaufbaus angeordneten, höhenverstellbaren Hubboden.

Ein Ladeaufbau bzw. Laderaum eines Kraftfahrzeuges, insbesondere für einen Sattelauflieger, ist aus dem deutschen Gebrauchsmuster DE 296 09 539 U 1 bekannt, wobei dort ein höhenverstellbarer Hubboden vorgesehen ist und das Fahrzeug zusätzlich mit gegen eine Aufstandsfläche ausfahrbaren Stempeln versehen ist, die so angeordnet und ausgelegt sind, daß der Laderaum bzw. das gesamte Fahrzeug derart angehoben werden kann, daß der untere Ladeboden in die Höhe einer Laderampe gebracht wird. Da sich gebräuchliche Laderampen im allgemeinen auf einer Höhe von etwa 1,50 m befinden, bedeutet dies ein Anheben des Laderaums bzw. Fahrzeugs von gut 1 m. Zur Erleichterung des Be- und Entladens ist der Ladeaufbau mit ausklappbaren Schwenkbühnen versehen, um einen Zwischenraum zwischen Ladeaufbau (unterer Ladeboden oder Hubboden) und Laderampe zu überbrücken.

Obwohl der bekannte Aufbau geeignet ist, die Be- und Entladezeiten zu verkürzen, da sowohl der Hubboden als auch der untere Ladeboden in eine Höhe mit der Laderampe gebracht werden kann, ist der konstruktive Aufwand erheblich, was zu entsprechenden Gewichts- und auch Kostennachteilen führt.

Die Aufgabe der Erfindung besteht darin, einen gattungsgemäßen Ladeaufbau im Hinblick auf minimalen zusätzlichen konstruktiven Aufwand dahingehend zu verbessern, daß Be- und Entladevorgänge vereinfacht und verkürzt werden.

Diese Aufgabe wird bei einem Ladeaufbau für ein Kraftfahrzeug, mit einem unteren Ladeboden und einem im Inneren des Ladeaufbaus angeordneten höhenverstellbaren Hubboden, dadurch gelöst, daß an einem hinteren Ende des Ladeaufbaus ein anheb- und absenkbarer Ladelift angeordnet ist.

Die Erfindung sieht vor, daß der Ladelift bis in Höhe des unteren Ladebodens absenkbar ist. Weiter kann der Ladelift bis in Höhe einer üblichen Laderampe, insbesondere etwa 1,50 m über Bodenniveau, anhebbar sein. Ferner kann der Ladelift bis in Höhe der obersten Anhebestellung des Hubbodens anhebbar sein.

Zweckmäßigerweise sieht die Erfindung vor, daß eine Plattform des Ladelifts horizontal und vertikal schwenkbar und in einer geneigten Stellung belastbar ist.

Bevorzugt sieht die Erfindung vor, daß der Ladelift mit zwei hydraulischen, oberhalb der höchsten Anhebestellung des Ladelifts vertikal angeordneten Kolben-/Zylindereinheiten angetrieben ist. Hierbei ist bevorzugt vorgesehen, daß jeweils ein flexibles Zugmittel, insbesondere eine Kette, mit einem Ende mit einer Plattform (16) des Ladelifts (14) verbunden ist, über eine an einem freien Ende einer Kolbenstange der Kolben-/Zylindereinheit angeordnete Umlenkung geführt ist und mit ihrem anderen Ende an einem ortsfesten Punkt des Ladeaufbaus oder Kraftfahrzeugs fixiert ist.

In zweckmäßiger Weiterbildung ist jede Kolben-/Zylindereinheit mit Umlenkung und Kette in einem nach hinten offenen, vertikal angeordneten Profil angeordnet, das als Vertikalführung für die Plattform des Ladelifts dient.

In bevorzugter Ausgestaltung ist vorgesehen, daß Hubboden und Ladelift hydraulisch angetrieben sind und einen gemeinsamen Hydraulikantrieb aufweisen. Der gemeinsame Hydraulikantrieb kann eine gemeinsame Hydraulikpumpe zum Bereitstellen von unter Druck stehendem Hydraulikfluid aufweisen.

In einer Variante der Erfindung ist vorgesehen, daß der Ladeaufbau eine Plane mit eingearbeiteten Metalldrähten als Alarmvorrichtung im Einbruchsfall aufweist. Außerdem oder als Alternative kann eine metallbedampfte Plane vorgesehen sein, mit der sich eine gute Wärmeisolation erzielen läßt.

Zudem wird diese Aufgabe erfindungsgemäß bei einem Ladeautbau für ein Fahrzeug mit einem unteren Ladeboden und einem im Inneren des Ladeaufbaus angeordneten, höhenverstellbaren Hubboden durch die Maßnahme gelöst, daß der untere Ladeboden und/oder der Hubboden (jeweils) eine Fördereinrichtung aufweist, um zylindrische Ladeeinheiten, insbesondere Papierrollen, deren Längsachse in Fahrzeuglängsrichtung weist, in Fahrzeuglängsrichtung zu transportieren. Damit können auch zylindrische Ladeeinheiten, wie beispielsweise Papierrollen, in vorteilhafter Weise geladen und transportiert werden.

Die Fördereinrichtung kann mindestens ein Förderband aufweisen. Das Förderband kann reibungsarm abgestützt sein, bspw. auf Rollen. Alternativ kann das Förderband auf einer Lauffläche abgestützt sein, die Bohrungen zur Druckluftzufuhr zur Bildung eines reibungsarmen Tragluftpolsters zwischen Lauffläche und Förderband aufweist.

Als weitere Alternative kann die Fördereinrichtung eine Gleitschiene mit einem oder mehreren gleitverschieblichen Tragelementen aufweisen.

Als weitere Alternative sieht die Erfindung vor, daß die Fördereinrichtung als Rollenbahn ausgebildet ist.

Hierbei besteht die Möglichkeit, daß die Rollenbahn als Exzenterrollenbahn ausgebildet ist.

Bevorzugt ist vorgesehen, daß die Fördereinrichtung Seitenführungen für die Ladeeinheiten aufweist. Die Seitenführungen können auf dem Ladeboden und/oder dem Hubboden abnehmbar gehalten sein, um die Möglichkeit zu schaffen, eine ebene Ladefläche herzustellen, wenn keine zylindrischen, sondern bspw. palettierte Ladeeinheiten transportiert werden sollen.

Weiter sieht die Erfindung bevorzugt vor, daß an einem hinteren Ende des Ladeaufbaus ein mit einer anheb- und absenkbaren Plattform versehener Ladelift angeordnet ist. Die Plattform ist zweckmäßigerweise als Überfahrhilfe mit einer mit der Fördereinrichtung ausgerichteten Abstützeinrichtung versehen, um zu ermöglichen, daß Ladeeinheiten über die Plattform hinweg auf den Ladeboden oder den Hubboden transportiert werden.

Die Erfindung bezieht sich ferner auf ein Fahrzeug mit einem erfindungsgemäßen Ladeaufbau, wobei es sich bspw. um einen Lastkraftwagen oder einen für ein Lastkraftfahrzeug bestimmten Anhänger handeln kann, bspw. einen Sattelauflieger.

Die Erfindung bezieht sich ferner auf ein Ladesystem mit einem erfindungsgemäßen Fahrzeug und mit einem höhenverstellbaren Ladetisch, insbesondere Scherentisch, der mit einer Fördereinrichtung für zylindrische Ladeeinheiten versehen ist, so daß die Möglichkeit geschaffen wird, mit Hilfe des Ladetischs den Ladeboden oder den Hubboden des Fahrzeugs mit zylindrischen Ladeeinheiten wie bspw. Papierrollen zu beschicken, insb. im Zusammenhang mit einer automatisierten Fördertechnik.

Die Erfindung wird nachfolgend anhand eines Ausführungsbeispiels unter Bezugnahme auf eine Zeichnung erläutert, wobei
Fig. 1 eine schematische Seitenansicht eines Sattelaufliegers mit einem erfindungsgemäßen Ladeaufbau zeigt, wobei eine obere Ebene des Ladeaufbaus beladen ist und der Ladelift in Höhe einer Laderampe steht;
Fig. 2 eine Ansicht entsprechend Fig. 1 zeigt, wobei der Hubboden des Fahrzeugs in eine angehobene Stellung bewegt ist;
Fig. 3 eine Ansicht entsprechend Fig. 2 zeigt, wobei auch eine untere Ebene des Ladeaufbaus beladen ist und der Ladelift in einer unteren Stellung dargestellt ist,
Fig. 4 eine schematische seitliche Schnittansicht des Ladeaufbaus im Bereich des Ladelifts zeigt,
Fig. 5 eine horizontale Schnittansicht des Ladeaufbaus im Bereich des Ladelifts zeigt,
Fig. 6 eine geschnittene Rückansicht des Ladeaufbaus im Bereich des Ladelifts zeigt,
Fig. 7 eine schematische, teilweise aufgeschnittene Seitenansicht eines Sattelaufliegers nach der Erfindung zeigt, gemäß einer weiteren Ausführungsform,
Fig. 8 eine rückseitige Ansicht des Sattelaufliegers nach Fig. 7 zeigt,
Fig. 9 einen Ausschnitt aus Fig. 7 in vergrößertem Maßstab zeigt,
Fig. 10 einen Ausschnitt aus Fig. 8 in vergrößertem Maßstab zeigt,
Fig. 11 eine schematische, teilweise aufgeschnittene Seitenansicht eines Sattelaufliegers nach der Erfindung zeigt, gemäß einer weiteren Ausführungsform,
Fig. 12 eine rückseitige Ansicht des Sattelaufliegers nach Fig. 11 zeigt,
Fig. 13 einen Ausschnitt aus Fig. 11 in vergrößertem Maßstab zeigt,
Fig. 14 einen Ausschnitt aus Fig. 12 in vergrößertem Maßstab zeigt,
Fig. 15 eine schematische, teilweise aufgeschnittene Seitenansicht eines Sattelaufliegers nach der Erfindung zeigt, gemäß einer weiteren Ausführungsform,
Fig. 16 eine rückseitige Ansicht des Sattelaufliegers nach Fig. 15 zeigt,
Fig. 17 einen Ausschnitt aus Fig. 15 in vergrößertem Maßstab zeigt,
Fig. 18 einen Ausschnitt aus Fig. 16 in vergrößertem Maßstab zeigt,
Fig. 19 eine schematische, teilweise aufgeschnittene Seitenansicht eines Sattelaufliegers nach der Erfindung zeigt, gemäß einer weiteren Ausführungsform,
Fig. 20 eine rückseitige Ansicht des Sattelaufliegers nach Fig. 19 zeigt,
Fig. 21 einen Ausschnitt aus Fig. 19 in vergrößertem Maßstab zeigt,
Fig. 22 einen Ausschnitt aus Fig. 20 in vergrößertem Maßstab zeigt,

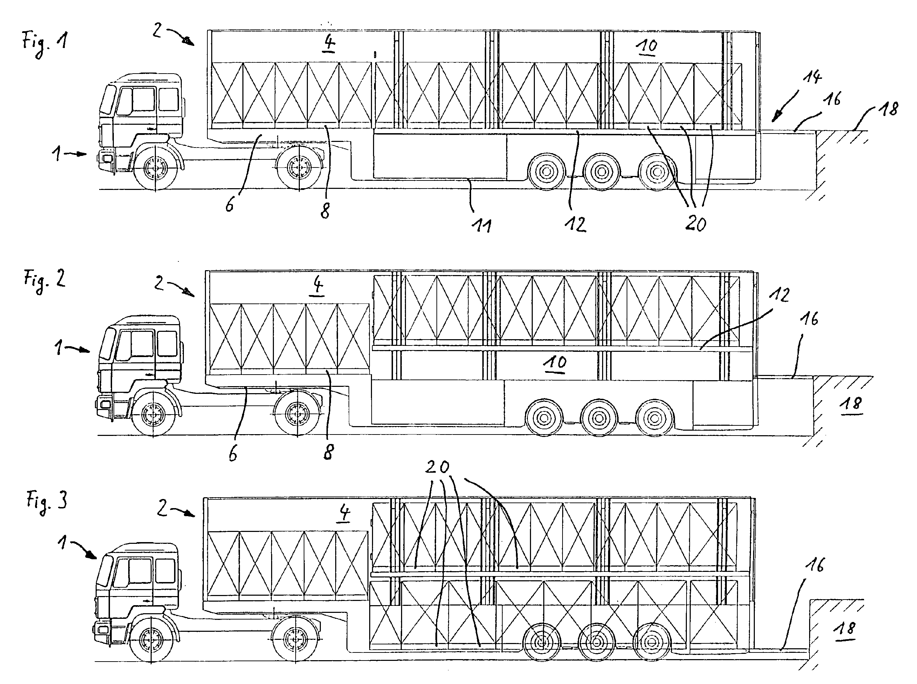

Fig. 1 zeigt einen Sattelzug mit einer Zugmaschine 1 und einem Sattelauflieger 2, der mit einem erfindungsgemäßen Ladeaufbau 4 versehen ist.

Der Sattelauflieger 2 bzw. der Ladeaufbau 4 gliedert sich in einen sogenannten Trailerhals 6 im Bereich der Verbindung mit der Zugmaschine 1, innerhalb dessen die nutzbare Ladehöhe geringer ist als im übrigen Teil des Ladeaufbaus 4 und in dem daher ein ortsfester Ladeboden 8 angeordnet ist.

An den Trailerhals 6 schließt sich nach hinten ein hinterer Ladebereich 10 an, in dem die volle Höhe des Ladeaufbaus 4 als nutzbare Ladehöhe zur Verfügung steht. Im hinteren Ladebereich 10 sind in an sich bekannter Weise ein unterer Ladeboden 10 und ein höhenverstellbarer Hubboden 12 angeordnet, wobei der Hubboden in der in Fig. 1 dargestellten Ladesituation auf gleicher Höhe wie der (vordere) Ladeboden 8 eingestellt ist.

Wie Fig. 1 weiter zeigt, ist der Ladeaufbau 4 erfindungsgemäß an seinem hinteren Ende mit einem Ladelift 14 versehen, der anheb- und absenkbar ist und in Fig. 1 in gleicher Höhe wie der Hubboden 12 dargestellt ist. Der Ladelift 14 ist zumindest innerhalb eines Höhenbereichs zwischen der in Fig. 1 dargestellten, angehobenen Stellung und einer in Fig. 3 dargestellten, abgesenkten Stellung verfahrbar und kann ggf. nach oben über die in Fig. 1 dargestellte Stellung hinaus verfahrbar sein. Außerdem ist eine Plattform 16 des Ladelifts aus der dargestellten horizontalen, abgeklappten Stellung in eine vertikale, angeklappte Stellung klappbar, in der der Ladelift einen unteren Teil der Rückwand des Ladeaufbaus bildet. Weiterhin kann vorgesehen sein, daß die Plattform des Ladelifts in eine aufwärts oder abwärts geneigte Stellung bringbar ist, um etwaige Höhenunterschiede zwischen der Höhe des vorderen Ladebodens 8, des Hubbodens 12 und der Höhe einer Laderampe 18, über die die Be- und Entladung des Ladeaufbaus 4 erfolgt, in gewissen Grenzen ausgleichen zu können.

Der Hubboden 12 ist mittels eines Hydraulikantriebes auch in voll beladenem Zustand anhebund absenkbar. Obwohl es in den meisten Einsatzfällen genügt, wenn der Hubboden innerhalb eines Bereichs zwischen der in Fig. 1 dargestellten, abgesenkten Stellung und der in Fig. 2 dargestellten, angehobenen Stellung verfahrbar ist, kann es zweckmäßig sein, wenn der Hubboden vollständig bis auf den unteren Ladeboden 10 absenkbar ist, um die volle Höhe des hinteren Ladebereichs 10 ohne Unterbrechung zur Verfügung zu haben, wenn bspw. besonders hohe Stückgüter zu laden sind.

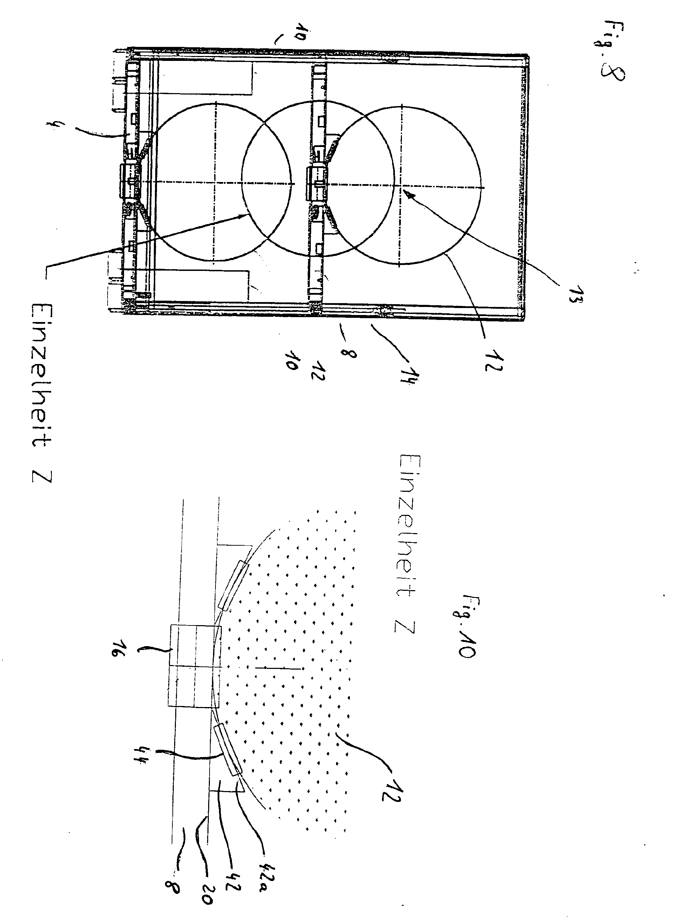

Fig. 4 bis 6 erläutern eine bevorzugte konstruktive Lösung für den Ladelift. Fig. 6 zeigt in einer schematischen, teilweise geschnittenen Rückansicht den Ladeaufbau im Bereich des Ladelifts, wobei zunächst zwei vertikale Führungen 30 dargestellt sind, in denen die Plattform 16 an Führungselementen 22 in Vertikalrichtung verschieblich geführt ist. Im oberen Bereich der Führungen 30 sind zwei hydraulische Kolben-/Zylindereinheiten 32 angeordnet, deren Kolbenstangen 34 nach unten ausfahrbar sind. Freie Enden 36 der Kolbenstangen 34 sind in Fig. 6 einerseits im eingezogenen Zustand (oben, Stellung "A") und andererseits im ausgefahrenen Zustand (unten, Stellung "B") dargestellt. Der vertikale Verfahrbereich der Plattform 16 entspricht allerdings nicht dem vertikalen Abstand zwischen den Stellungen A und B, sondern dem doppelten Wert davon, da die Plattform nicht unmittelbar an den Kolbenstangen 34 angelenkt ist, sondern über einen Übersetzungsantrieb, dessen Aufbau sich aus Fig. 4 ergibt.

Fig. 4 zeigt eine der Führungen 30 in einer teilweise geschnittenen, schematischen Seitenansicht, aus der neben der Führung 30 zunächst eine Kolben-Zylindereinheit 32 mit Kolbenstange 34 sowie die Plattform 16 mit einem Führungselement 22 hervorgehen. Wie Fig. 4 weiter zeigt, ist an dem freien (unteren) Ende der Kolbenstange 34 ein Umlenkelement 40 (Kettenrad oder Rolle) um eine horizontale Achse drehbar gehalten, um das ein flexibles Zugmittel, bspw. eine Kette 42, geführt ist, deren eines Ende 44 in einem unteren Bereich der Führung 30 ortsfest fixiert ist und deren anderes Ende 46 an dem Führungselement 22 der Plattform 16 fixiert ist. Die dargestellte, untere Position der Plattform 16 entspricht ersichtlich der ausgefahrenen Stellung ("B") der Kolbenstangen 34. Im vollständig angehobenen Zustand ("A") steht die Plattform etwa in Höhe der unteren Enden der Kolben-/Zylindereinheiten 32.

Durch diese Konstruktion ergibt sich beim Ein- bzw. Ausfahren der Kolbenstange 34 ein vertikaler Bewegungshub der Plattform 16, der dem doppelten zurückgelegten Weg der Kolbenstange 34 entspricht, so daß die Plattform (mindestens) bis in Höhe der obersten Anhebestellung des Hubbodens anhebbar ist, d.h. in etwa 2/3 der gesamten Höhe des Ladeaufbaus.

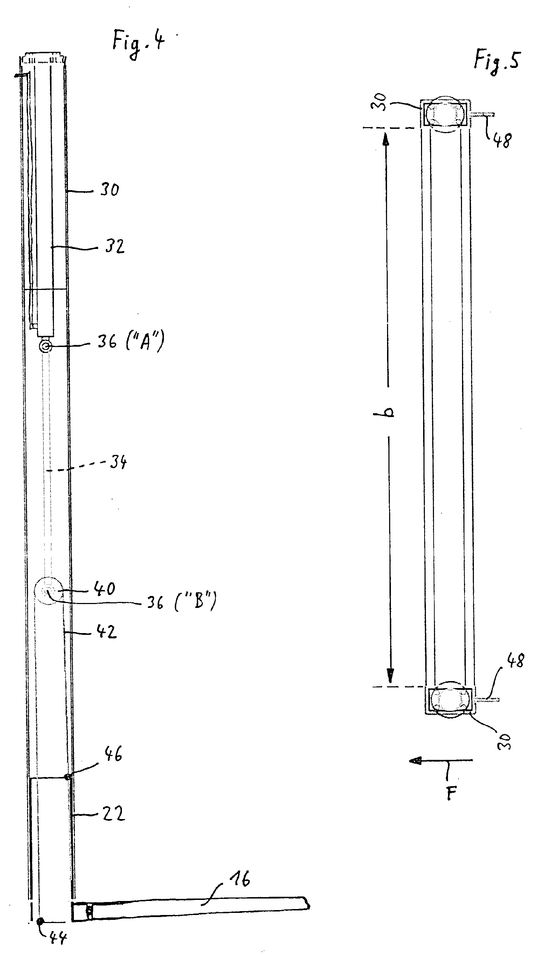

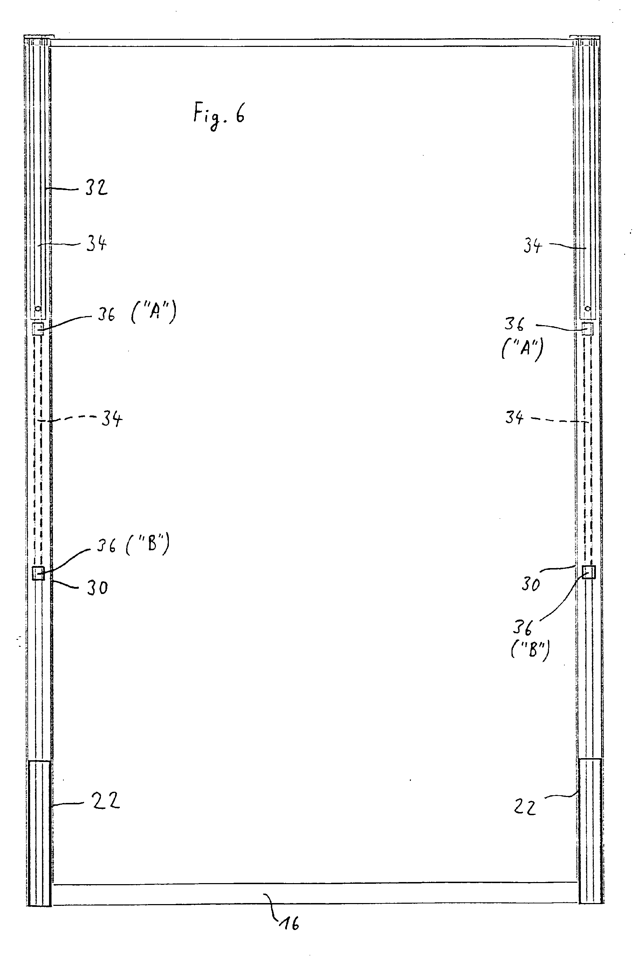

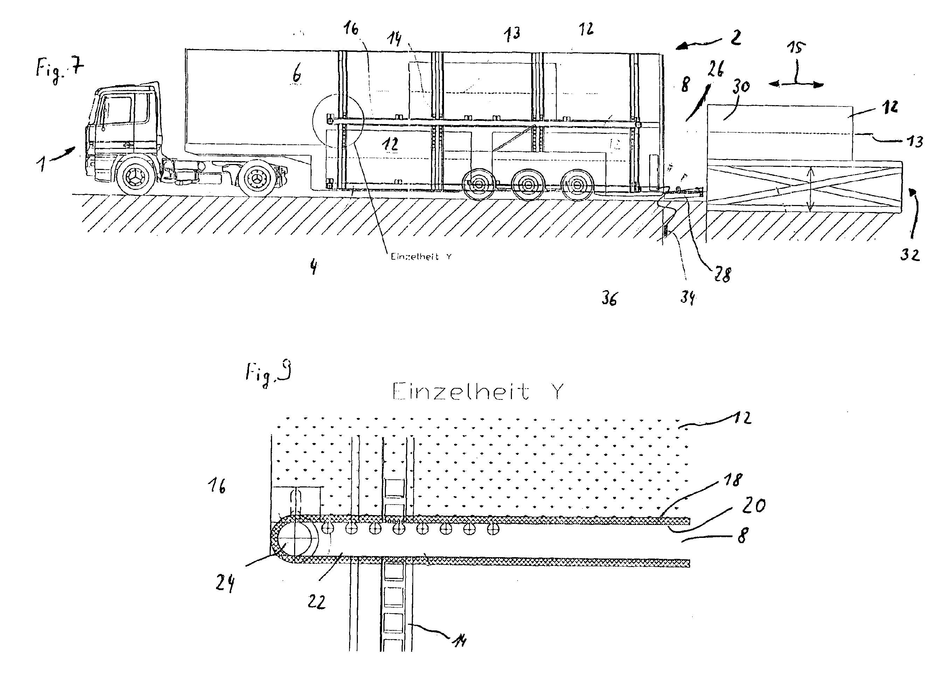

Fig. 5 zeigt in einer horizontalen Schnittansicht die Querschnittsform der Führungen 30. Die Führungen sind nach hinten, d.h. entgegen der Fahrtrichtung F offen, um eine Verbindung zwischen den Führungselementen 22 und der Plattform 16 zu ermöglichen. Zu diesem Zwekke können die Führungen 30 entweder als nach hinten offene U-Profile oder aber als nach hinten lediglich teilweise offene C-Profile ausgebildet sein, wobei ein vertikaler Schlitz den Durchtritt eines Verbindungselements 48 ermöglicht, welches die Führungselemente 22 mit der Plattform 16 verbindet.

Die dargestellte Konstruktion mit einer "ziehenden" Kolbenstange ermöglicht die Verwendung einer relativ schlanken Kolben-/Zylindereinheit 32, da die Kolbenstange nicht auf Druck, sondern lediglich auf Zug beansprucht wird. Aufgrund der Anordnung einer an der Kolbenstange umgelenkten Zugkette ergibt sich zudem ein verdoppelter Weg für die Plattform 16. Ferner beansprucht die Länge quer zur Fahrtrichtung F wenig Bauraum, da die Verbindungselemente 48 nicht quer, sondern in Fahrtrichtung angeordnet sind, so daß eine größtmögliche freie innere Breite b im Bereich der Ladeöffnung erzielt wird.

Die Beladung eines erfindungsgemäßen Ladeaufbaus z.B. mit Paletten 20 erfolgt in der Reihenfolge der Fig. 1 bis 3, wobei zunächst ausgehend von der Laderampe 18 bei abgesenktem Hubboden und entsprechend positioniertem Ladelift der Trailerhals 6 und der Hubboden 12 beladen werden. Nach Anheben des vollständig beladenen Hubbodens in die angehobene Stellung gemäß Fig. 2 kann auch die untere Hälfte des hinteren Ladebereichs 10 unterhalb des Hubbodens 12 beladen werden, und zwar entweder von ebener Erde aus oder über die Laderampe 18 mit Hilfe des anheb- und absenkbaren Ladelifts 14.

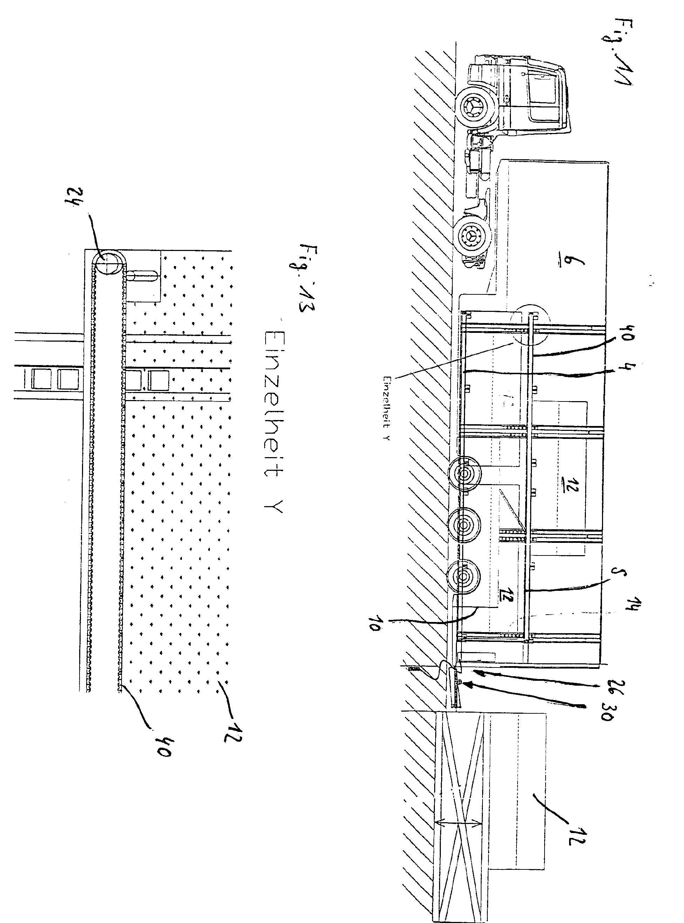

Weiterhin sei auf Fig. 7 bis 10 Bezug genommen, aus denen der Autbau eines erfindungsgemäßen Ladeaufbaus hervorgeht. Fig. 7 zeigt in einer schematischen und teilweise aufgeschnittenen Seitenansicht einen Sattelauflieger mit Zugmaschine 1 und Auflieger 2, der einen unteren Ladeboden 4 und einen im Inneren des im ganzen mit 6 bezeichneten Ladeaufbaus angeordneten, höhenverstellbaren Hubboden 8 aufweist. Der untere Ladeboden 4 ist ortsfest in einer Höhe von etwa 400 mm über der Fahrbahnhöhe angeordnet und ermöglicht eine Beladung auch innerhalb eines zwischen Radhäusern 10 liegenden Bereichs, wie Fig. 8 zeigt, in der eine Papierrolle 12 in liegender Anordnung angedeutet ist. Bei einer äußeren Breitenabmessung des Aufliegers von 2550 mm verbleibt zwischen den Radhäusern 10 eine nutzbare Ladebreite von 1680 mm, die von einer Papierrolle 12 mit einem Durchmesser von ca. 1500 mm größtenteils eingenommen wird.

Der Hubboden 8 ist an Führungen 14 in vertikaler Richtung verstellbar, und zwar vorzugsweise einerseits nach unten falls erforderlich bis unmittelbar oberhalb des unteren Ladebodens 4 und nach oben bis etwa mindestens in Höhe der halben nutzbaren inneren Höhe des Ladeaufbaus 6, wobei diese Position in Fig. 7 und 8 dargestellt ist.

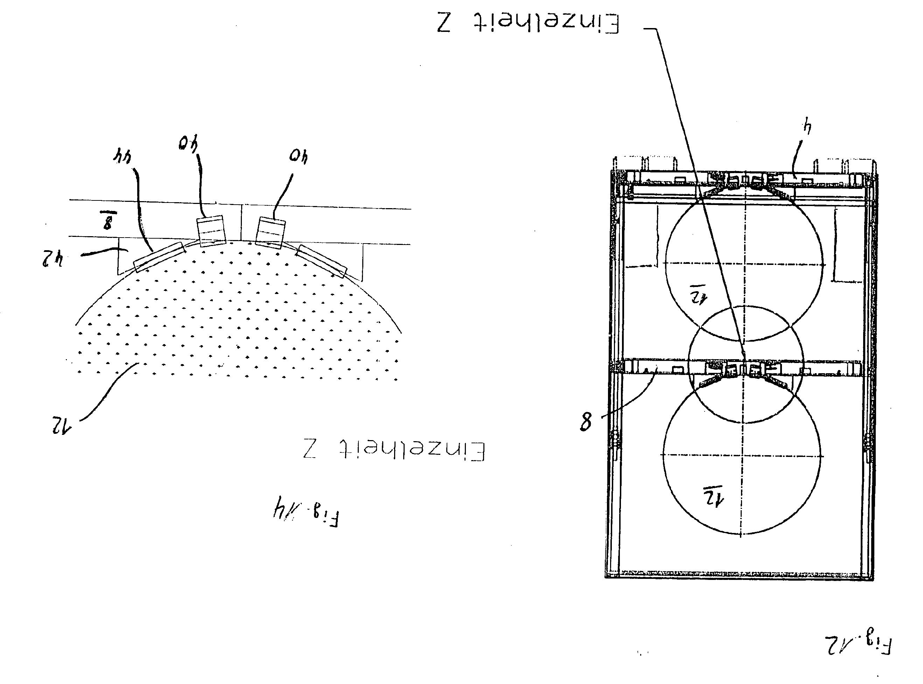

Der untere Ladeboden 4 und der Hubboden 8 sind erfindungsgemäß jeweils mit einer Fördereinrichtung versehen, mit der eine zylindrische Ladeeinheit wie bspw. eine Papierrolle, die mit ihrer Längsachse 13 in Fahrt- bzw. Fahrzeuglängsrichtung 15 ausgerichtet ist, in Fahrzeuglängsrichtung 15 transportiert werden kann. Im ersten Ausführungsbeispiel nach Fig. 7 bis 10 ist die Fördereinrichtung jeweils durch ein mittig in dem Ladeboden 4 und dem Hubboden 8 versenkt angeordnetes bzw. eingelassenes Förderband 16 gebildet. Wie Fig. 10 zeigt, schließt der obere Förderabschnitt 18 des Förderbands 16 im wesentlichen bündig mit einer Oberseite 20 des Hubbodens 8 ab oder steht geringfügig tiefer oder darüber vor, wobei entsprechendes für das Förderband 16 im unteren Ladeboden 4 gilt. Dadurch ist sichergestellt, daß Flurförderfahrzeuge wie Hubwagen, Gabelstapler o.ä. relativ problemlos über das Förderband hinwegfahren können, wenn andere nicht zylindrische Ladeeinheiten wie bspw. Paletten geladen oder entladen werden sollen.

Wie Fig. 9 zeigt, ist der obere Förderabschnitt 18 des Förderbands 16 zur Erzielung eines möglichst reibungsarmen Laufs auf Rollen 22 abgestützt, die ihrerseits im Ladeboden bzw. Hubboden gelagert sind. Endseitig läuft das Förderband 16 um Antriebs- bzw. Umlenkrollen 24 (nur eine dargestellt).

Als Alternative zu den das Förderband abstützenden Rollen 22 könnte eine abstützende Lauffläche vorgesehen sein, insb. aus Metallblech, die zur Bildung eines reibungsverringernden Tragluftpolsters zwischen Lauffläche und Förderband mit Bohrungen zur Druckluftzufuhr versehen sein kann. Durch Einblasen von Druckluft kann dann das Förderband abschnittsweise, d.h. dort wo sich eine Last auf dem Förderband befindet, mittels eines lokal gebildeten Tragluftpolsters geringfügig von der Lauffläche abgehoben werden, so daß sich ein besonders reibungsarmer Lauf des Förderbands erzielen läßt.

Wie Fig. 7 weiter zeigt, ist der Ladeaufbau an seinem hinteren Ende mit einem Ladelift 26 versehen, der eine anheb- und absenkbare Plattform 28 aufweist. Die Plattform 28 kann zwischen der dargestellten, im wesentlichen horizontalen Position und einer an den Ladeaufbau angeklappten, im wesentlichen vertikalen Position verstellt werden. Die Plattform 28 ist als Überfahrhilfe mit einer mit der Fördereinrichtung des Ladebodens bzw. Hubbodens (Förderband 16) ausgerichteten Abstützeinrichtung 30 versehen, die beim Laden und Entladen von zylindrischen Ladeeinheiten hilfreich ist, deren Länge (Abmessung in Richtung einer Längsachse) relativ gering ist. Dadurch kann beim Übergeben einer zylindrischen Ladeeinheit bspw. von einem Scherentisch 32 ein Kippen einer zu übergebenden zylindrischen Ladeeinheit verhindert werden.

Obwohl ein motorischer Antrieb des Förderbands und der Abstützeinrichtung des Ladelifts nicht zwingend erforderlich ist, ist ein solcher Antrieb doch in den meisten Fällen zweckmäßig und kann bspw. über eine handbetätigte Steuerungseinheit 34, die über ein Verbindungskabel 36 mit einer entsprechenden Steuerung verbunden ist, gesteuert werden. Der Antrieb kann elektrisch, hydraulisch, pneumatisch oder in sonstiger Weise arbeiten.

Der Hubboden 8 ist mittels eines Hydraulikantriebs noch in voll beladenem Zustand anhebund absenkbar. Es kann ein gemeinsamer Antrieb, z.B. Hydraulikantrieb, sowohl für den Hubboden als auch für den Ladelift vorgesehen sein.

Zusammen mit einem erfindungsgemäßen Fahrzeug bildet der Scherentisch 32 in der in Fig. 7 dargestellten Anordnung ein erfindungsgemäßes Ladesystem, mit dem in besonders vorteilhafter Weise zylindrische Ladeeinheiten wie Papierrollen be- und entladen werden können. Der Scherentisch ist in der Höhe zwischen dem unteren Ladeboden 4 und dem Hubboden 8 verstellbar, wobei die Plattform 28 des Ladelifts als Überfahrhilfe eingesetzt wird.

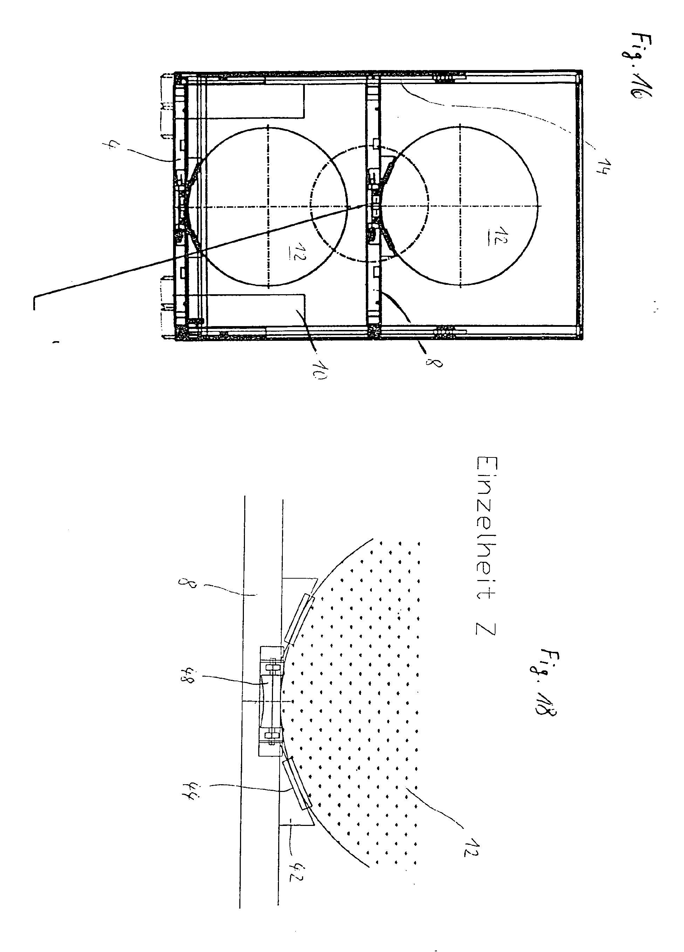

Fig. 11 bis 14 erläutern eine weitere Ausführungsform der Erfindung, wobei die Fördereinheit auf dem unteren Ladeboden und dem Hubboden anstelle eines Förderbandes in Form von zwei Zahnriemen 40 ausgebildet ist, wie insbesondere Fig. 14 zeigt. Der Vorteil bei dieser Ausführungsform besteht einerseits darin, daß die Zahnriemen eine relativ geringe Breite aufweisen und somit eben sein können, obwohl durch ihre winkelversetzte Anordnung bereits eine Annäherung an die Umfangskontur der aufzunehmenden zylindrischen Ladeeinheiten erreicht ist, und andererseits darin, daß durch formschlüssigen Eingriff mit Antriebselementen große Antriebskräfte übertragbar sind.

Wie bereits in Fig. 10 dargestellt ist, sind seitlich von der Fördereinrichtung Seitenführungen 42 angeordnet, die für eine seitliche Führung der aufgenommenen zylindrischen Ladeeinheit 12 sowohl während des Fördervorgangs als auch während des anschließenden Transports auf der Straße dienen. Im einfachsten Falle bestehen die Seitenführungen 42 aus z.B. dreieckförmigen Stützelementen, die bspw. mittels Fixierungsbohrungen im Hubboden bzw. unteren Ladeboden lösbar fixiert werden können. Auf einer geneigten Oberseite 42a jeder Seitenführung 42 ist eine Stützrolle 44 drehbar gelagert, die einen reibungs- und beschädigungsfreien Durchlauf der zylindrischen Ladeeinheit während des Fördervorgangs gewährleistet. Die Seitenführungen sind in regelmäßigen Abständen in Fahrzeuglängsrichtung angeordnet, bspw. mit einem gegenseitigen Abstand von 1 m, und können mit wenigen Handgriffen gelöst und vom Hubboden bzw. Ladeboden abgenommen werden, um einen Transport andersartiger Ladeeinheiten wie bspw. Paletten zu ermöglichen.

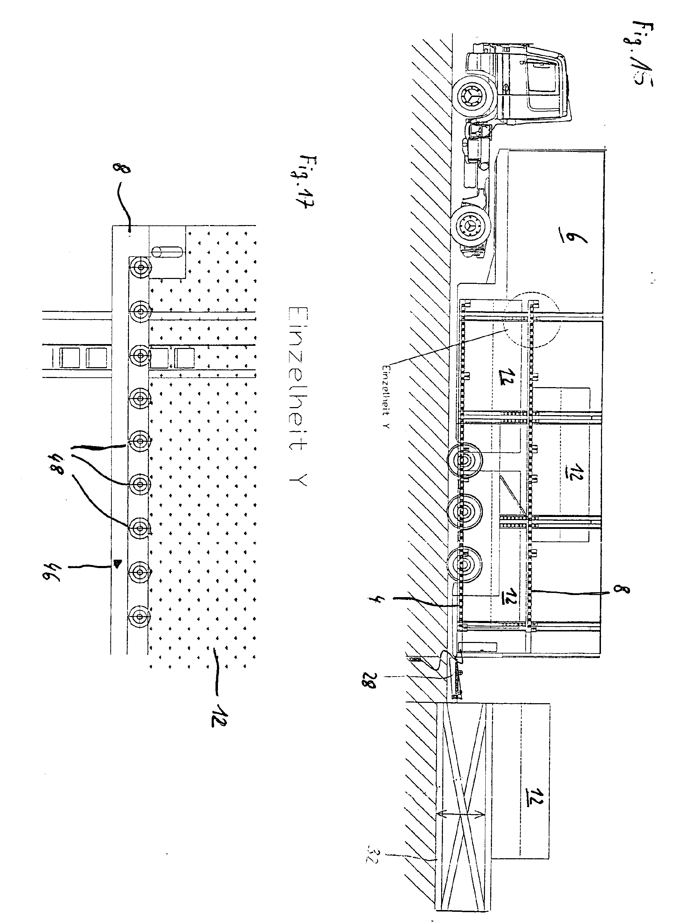

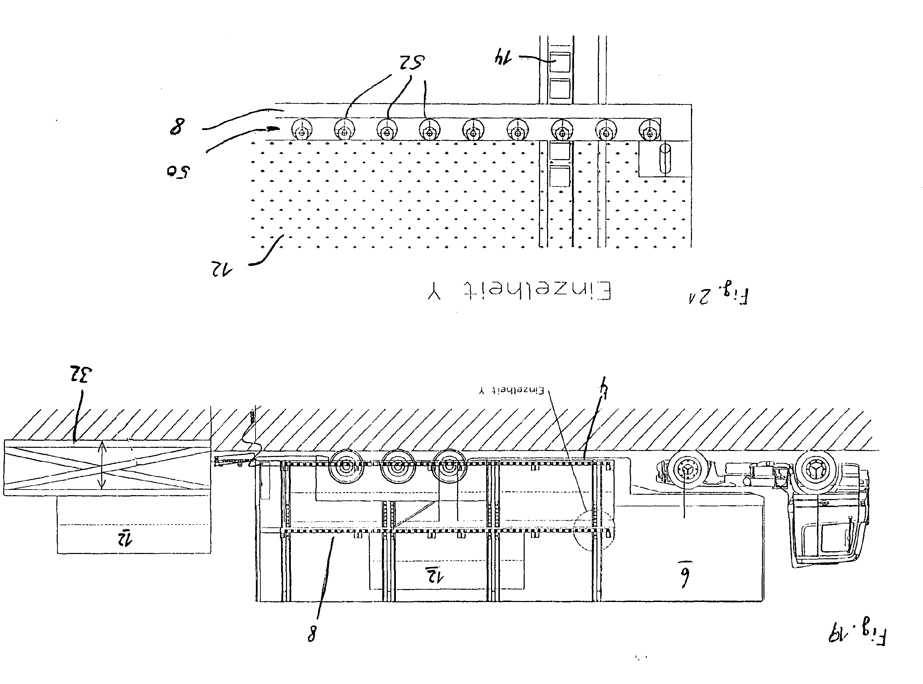

Fig. 15 bis 18 erläutern eine weitere Ausführungsform der Erfindung, wobei die Fördereinrichtung in Form einer Rollenbahn 46 ausgebildet ist. Rollen 48 sind mittig im Hubboden bzw. Ladeboden eingelassen, wobei einzelne oder alle Rollen angetrieben sein können. Bspw. kann ein gemeinsamer Antrieb über eine seitliche Antriebskette erfolgen, die kraftschlüssig mit Ritzeln, die mit den Rollen verbunden sind, zusammenwirkt.

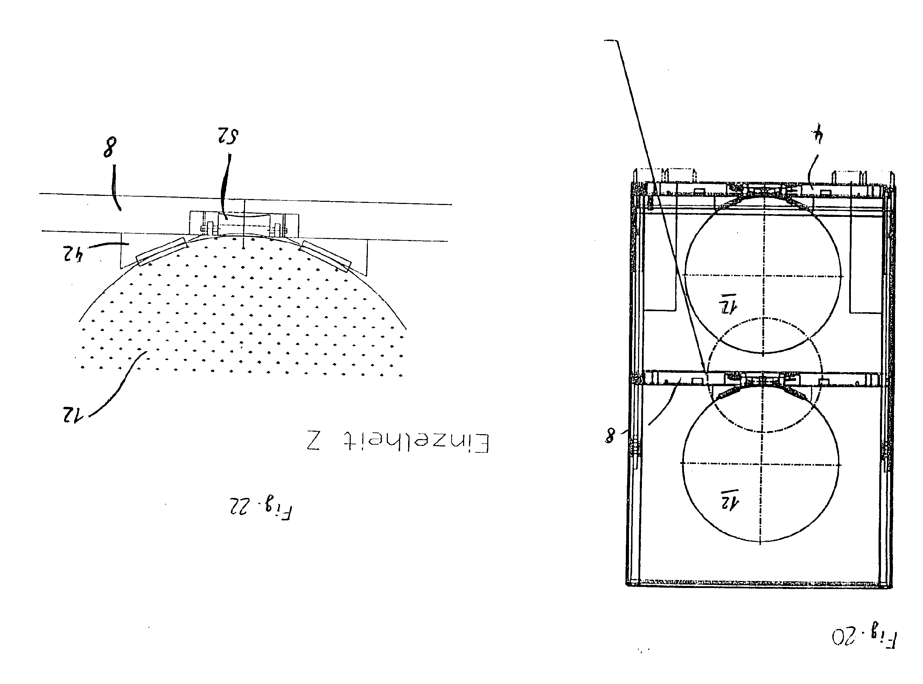

Fig. 19 bis 22 erläutern eine vierte Ausführungsform der Erfindung, in der die Fördereinrichtung als Exzenterrollenbahn 50 ausgebildet ist. Exzenterrollen 52 sind mittig im Hubboden/oder Ladeboden eingelassen, wobei in diesem Falle ein motorischer Antrieb unumgänglich ist, um aufgenommene Ladeeinheiten vor- oder zurückzubewegen.

Die Erfindung ermöglicht einen schonenden Transport insbesondere von Papierrollen, da eine Drehung der Papierrollen zum Transport von einer horizontalen (Längsachse ist horizontal) in eine vertikale Stellung (Längsachse ist vertikal) vermieden werden kann. Dadurch wird die Gefahr unbeabsichtigter Beschädigungen stark reduziert. Das erfindungsgemäße Ladesystem mit einem höhenverstellbaren Ladetisch ermöglicht ein vollautomatisches Be- und Entladen von zylindrischen Ladeeinheiten, wie insbesondere Papierrollen.

Im übrigen kann die Berücksichtigung folgender Aspekte ebenfalls sinnvoll sein:

Bevorzugt ist vorgesehen, daß der Hubboden in voll beladenem Zustand anheb- und absenkbar ist. Zweckmäßigerweise ist vorgesehen, daß der Hubboden bis auf den unteren Ladeboden absenkbar ist. Weiterhin ist bevorzugt vorgesehen, daß der Hubboden bis in eine oberste Anhebestellung anhebbar ist, in der er sich mindestens in der Mitte der vertikalen Höhe des Ladeaufbaus befindet. Zweckmäßigerweise ist der Hubboden in jeder Hubstellung verriegelbar.

Es können mechanische Mittel zum Verriegeln des Hubbodens vorgesehen sein. Zweckmäßigerweise ist vorgesehen, daß der Hubboden hydraulisch, pneumatisch oder elektromotorisch angetrieben ist.

Weiter kann vorgesehen sein, daß der Ladelift hydraulisch, pneumatisch oder elektromotorisch angetrieben ist.

Bevorzugt ist vorgesehen, daß der Ladelift auf einem Sattelauflieger angeordnet oder als Teil eines Sattelaufliegers ausgebildet ist.

In weiterer Ausgestaltung der Erfindung kann vorgesehen sein, daß der Hubboden zumindest abschnittsweise wärmeisoliert ist. Weiterhin kann der Ladeaufbau zumindest abschnittsweise wärmeisoliert sein und mit dem wärmeisolierten Hubbboden mindestens einen wärmeisolierten Bereich bilden, insbesondere zum Transportieren von Tiefkühlwaren.

Bevorzugt ist vorgesehen, daß die Fördereinrichtung in Ladeboden und/oder Hubboden versenkt angeordnet ist, um zu ermöglichen, daß ein Flurförderfahrzeug (handbetätigter Hubwagen, Staplerfahrzeug usw.) die Fördereinrichtung ohne nennenswerte Behinderung überfahren kann.

Bevorzugt ist vorgesehen, daß die Fördereinrichtung mittig in Fahrzeuglängsrichtung angeordnet ist.

Auch hier kann vorgesehen sein, daß die Lauffläche quer zur Fahrzeuglängsrichtung gekrümmt ist, um zylindrische Ladeeinheiten besser aufnehmen zu können.

Als weitere Alternative kann vorgesehen sein, daß die Fördereinrichtung einen oder mehrere Zahnriemen aufweist, mit denen aufgrund formschlüssiger Antriebskraftübertragung eine große Kraft in Förderrichtung übertragbar ist.

Die Rollen können eine quer zur Fahrzeuglängsrichtung konkav gekrümmte Oberflächenform aufweisen, um eine zylindrische Ladeeinheit günstiger, d.h. mit reduzierter Flächenpressung aufnehmen zu können.

Bevorzugt ist vorgesehen, daß die Fördereinrichtung motorisch antreibbar ist, zweckmäßigerweise in beiden Richtungen (in und entgegen der Fahrtrichtung des Fahrzeugs). Weiter ist bevorzugt vorgesehen, daß die Fördereinrichtung in Fahrzeuglängsrichtung in mehrere Teilabschnitte unterteilt ist, die unabhängig voneinander bewegbar bzw. antreibbar sind, um die Möglichkeit zu schaffen, mehrere zylindrische Ladeeinheiten in Fahrzeuglängsrichtung hintereinander, auch unabhängig voneinander, zu laden und zu entladen. Hierfür ist es zweckmäßig, wenn alle Teilabschnitte mit gleicher Geschwindigkeit antreibbar sind.

Zweckmäßigerweise ist vorgesehen, daß die Seitenführungen mit Stützrollen versehene Stützelemente aufweisen.

Die Abstützeinrichtung kann motorisch antreibbar sein.

Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Ladeaufbau (4) für ein Kraftfahrzeug, mit einem unteren Ladeboden (11) und einem im Inneren des Ladeaufbaus (4) angeordneten, höhenverstellbaren Hubboden (12), **dadurch gekennzeichnet, daß** an einem hinteren Ende des Ladeaufbaus (4) ein anheb- und absenkbarer Ladelift angeordnet ist.

2. Ladeaufbau nach Anspruch 1, **dadurch gekennzeichnet, daß** der Ladelift (14) bis in Höhe des unteren Ladebodens (8) absenkbar ist.

3. Ladeaufbau Anspruch 1 oder 2, **dadurch gekennzeichnet, daß** der Ladelift (14) bis in Höhe einer üblichen Laderampe, insbesondere etwa 1,50 m über Bodenniveau, anhebbar ist.

4. Ladeaufbau nach einem der vorangehenden Ansprüche, **dadurch gekennzeichnet, daß** der Ladelift (14) bis in Höhe der obersten Anhebestellung des Hubbodens (12) anhebbar ist.

5. Ladeaufbau nach einem der vorangehenden Ansprüche, **dadurch gekennzeichnet, daß** eine Plattform (16) des Ladelifts horizontal und vertikal schwenkbar und in einer geneigten Stellung belastbar ist.

6. Ladeaufbau nach einem der vorangehenden Ansprüche, **dadurch gekennzeichnet, daß** der Ladelift mit zwei hydraulischen, oberhalb der höchsten Anhebestellung des Ladelifts (14) vertikal angeordneten Kolben-/Zylindereinheiten (32) angetrieben ist.

7. Ladeaufbau nach Anspruch 6, **dadurch gekennzeichnet, daß** jeweils ein flexibles Zugmittel (42), insbesondere eine Kette, mit einem Ende (46) mit einer Plattform (16) des Ladelifts (14) verbunden ist, über eine an einem freien Ende (36) einer Kolbenstange (34) der Kolben-/Zylindereinheit (32) angeordnete Umlenkung (40) geführt ist und mit ihren anderen Ende (44) an einem ortsfesten Punkt des Ladeaufbaus oder Kraftfahrzeugs fixiert ist.

8. Ladeaufbau nach Anspruch 7, **dadurch gekennzeichnet, daß** jede Kolben-/Zylindereinheit (32) mit Umlenkung und Kette in einem nach hinten offenen, vertikal angeordneten Profil (30) angeordnet ist, das als Vertikalführung für die Plattform (16) des Ladelifts (14) dient.

9. Ladeaufbau nach einem der vorangehenden Ansprüche, **dadurch gekennzeichnet, daß** Hubboden (12) und Ladelift (14) hydraulisch angetrieben sind und einen gemeinsamen Hydraulikantrieb aufweisen.

10. Ladeaufbau nach Anspruch 9, **dadurch gekennzeichnet, daß** der gemeinsame Hydraulikantrieb eine gemeinsame Hydraulikpumpe zum Bereitzustellen von unter Druck stehendem Hydraulikfluid aufweist.

11. Ladeaufbau nach einem der vorangehenden Ansprüche, **gekennzeichnet durch** eine Plane mit eingearbeiteten Metalldrähten als Alarmvorrichtung im Einbruchfall.

12. Ladeaufbau nach einem der vorangehenden Ansprüche, **gekennzeichnet durch** eine metallbedampfte Plane.

13. Ladeaufbau für ein Fahrzeug (2), mit einem unteren Ladeboden (4) und einem im Inneren des Ladeaufbaus angeordneten, höhenverstellbaren Hubboden (8), **dadurch gekennzeichnet, daß** der untere Ladeboden (4) und/oder der Hubboden (8) (jeweils) eine Fördereinrichtung (16, 40, 46, 50) aufweist, um zylindrische Ladeeinheiten, insb. Papierrollen (12), deren Längsachse (13) in Fahrzeuglängsrichtung (15) weist, in Fahrzeuglängsrichtung (15) zu transportieren.

14. Ladeaufbau nach Anspruch 13, **dadurch gekennzeichnet, daß** die Fördereinrichtung mindestens ein Förderband (16) aufweist.

15. Ladeaufbau nach Anspruch 14, **dadurch gekennzeichnet, daß** das Förderband (16) reibungsarm abgestützt ist, insb. auf Rollen (22).

16. Ladeaufbau nach Anspruch 14, **dadurch gekennzeichnet, daß** das Förderband (16) auf einer Lauffläche abgestützt ist, die Bohrungen zur Druckluftzufuhr zur Bildung eines reibungsarmen Tragluftpolsters zwischen Lauffläche und Förderband aufweist.

17. Ladeaufbau nach Anspruch 13, **dadurch gekennzeichnet, daß** die Fördereinrichtung eine Gleitschiene mit einem oder mehreren gleitverschieblichen Tragelementen aufweist.

18. Ladeaufbau nach Anspruch 13, **dadurch gekennzeichnet, daß** die Fördereinrichtung als Rollenbahn (46) ausgebildet ist.

19. Ladeaufbau nach Anspruch 18, **dadurch gekennzeichnet, daß** die Rollenbahn als Exzenterrollenbahn (50) ausgebildet ist.

20. Ladeaufbau nach einem der vorangehenden Ansprüche, **dadurch gekennzeichnet, daß** die Fördereinrichtung Seitenführungen (42) für die Ladeeinheiten (12) aufweist.

21. Ladeaufbau nach Anspruch 20, **dadurch gekennzeichnet, daß** die Seitenführungen (42) auf Ladeboden (4) und/oder Hubboden (8) abnehmbar gehalten sind.

22. Ladeaufbau nach einem der vorangehenden Ansprüche, **dadurch gekennzeichnet, daß** an einem hinteren Ende des Ladeaufbaus ein mit einer anheb- und absenkbaren Plattform (28) versehener Ladelift (26) angeordnet ist.

23. Ladeaufbau nach Anspruch 22, **dadurch gekennzeichnet, daß** die Plattform (28) als Überfahrhilfe mit einer mit der Fördereinrichtung ausgerichteten Abstützeinrichtung (30) versehen ist.

24. Fahrzeug (2) mit einem Ladeaufbau nach einem der vorangehenden Ansprüche.

25. Ladesystem mit einem Fahrzeug (2) nach Anspruch 24 und einem höhenverstellbaren Ladetisch, insb. Scherentisch (32), der mit einer Fördereinrichtung für zylindrische Ladeeinheiten (12) versehen ist.
